Europäisches Patentamt

**European Patent Office**

Office européen des brevets

(19)

(11) Publication number: **0 076 237**

**A1**

(12)

# EUROPEAN PATENT APPLICATION

(21) Application number: **82830119.2**

(22) Date of filing: **04.05.82**

(51) Int. Cl.³: **G 03 B 31/00**

(30) Priority: **25.09.81 IT 4937381**

(43) Date of publication of application:
**06.04.83 Bulletin 83/14**

(84) Designated Contracting States:
**AT BE CH DE FR GB LI NL SE**

(71) Applicant: **Stufa, Vincenzo**
**Via Pico, 18**
**I-00189 Roma(IT)**

(71) Applicant: **Salaris, Antonio**
**Via Val Pellice, 77**
**I-00141 Roma(IT)**

(72) Inventor: **Stufa, Vincenzo**
**Via Pico, 18**
**I-00189 Roma(IT)**

(72) Inventor: **Salaris, Antonio**
**Via Val Pellice, 77**
**I-00141 Roma(IT)**

(74) Representative: **Mascioli, Alessandro, Prof.Dr.**
**c/o A.N.D.I. Associazione Nazionale degli Inventori Via**
**Lima, 35**
**I-00198 Roma(IT)**

(54) **Apparatus for simultaneous cinematographic viewing in several languages.**

(57) Apparatus for contemporaneous showing of films in several different languages, with personalized reception for each viewer in a selected language.

FIG.2

EP 0 076 237 A1

Croydon Printing Company Ltd.

0076237

## Apparatus for simultaneous cinematographic viewing in several languages

STUFA Vincenzo, SALARIS Antonio; Via Val Pellice 77, Rome

The invention concerns an apparatus allowing contemporaneous cinematographic representation for viewers of different languages, each in his own language.

The difficulty encountered by viewers of films in their original edition is well known, with sub-titles in their mother tongue which distract their attention from the events shown, resulting in lost detail and wandering attention.

The aim of this invention is an apparatus to be placed in movie theaters to allow viewing of films projected in several languages contemporaneously, with personalized reception for each viewer in his pre-selected language.

This aim is achieved with an apparatus involving a film with one optical track and four magnetic tracks: the original version sound track is recorded on the former, while all or some of the others contain versions in different languages, so that all the recorded information, passing before the optical reading cell and the multiple head for magnetic reading in the projector, is sent contemporaneously to the preamplifiers, from where the signals are sent via cable to a fixed radio transmitter, preferably frequency modulation, placed and balanced for the volume of the movie theater; said theater is equipped with antennas for the contemporaneous transmission, to several portable receivers distributed among the viewers, of the various versions, selected with a channel selector and received over earphones.

In one embodiment, said portable receivers have no channel selectors and are tuned to a transmitter signal corresponding to only one language.

In another embodiment, said receivers are not portable and are inserted in or connected to the seat or slot for each spectator.

The film used may be of the type used for stereophonic cinematographic versions, where the different language versions are recorded on the magnetic tracks, totally or partially replacing the sound effects.

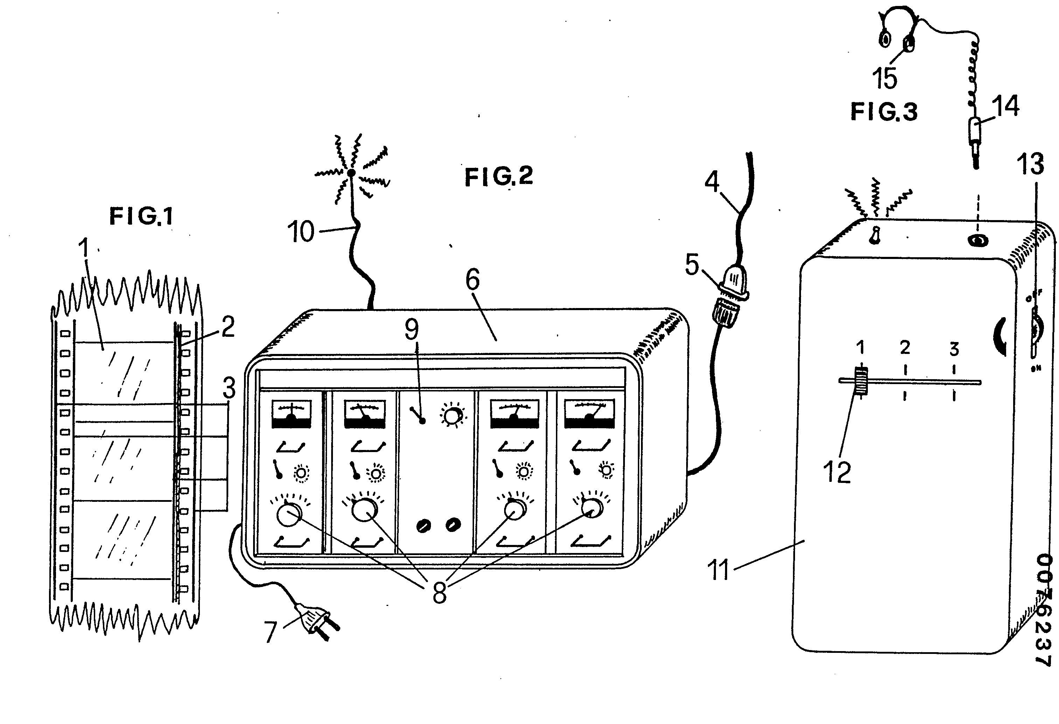

A preferred embodiment of the invention is described below, in the enclosed figures 1, 2, 3 and 4.

Figure 1 shows a film with one optical track and four magnetic tracks.

Figure 2 shows an axonometric view of the fixed transmitter.

- 3 -

0076237

Figure 3 shows a portable receiver.

Figure 4 shows a block diagram of the operational scheme.

The drawings show in detail film 1 with optical track 2 for the original language version and magnetic tracks 3 for the translations, suitable for use in a projector of known type; signals from said film are read contemporaneously on all or part of said tracks 2 and 3, and sent via cable 4 and collector 5 to fixed radio transmitter 6, of frequency, amplitude, CB or other type modulation, supplied electric current via plug 7 and equipped with signal regulators 8 to vary the volume according to the intensity of the recording, with transformer 9 and antennas 10 to send the signals to portable receivers 11; said receivers are coherent with transmitter 6 and equipped with channel selector 12, switch and volume regulator 13, and headphone 15 with terminal 14.

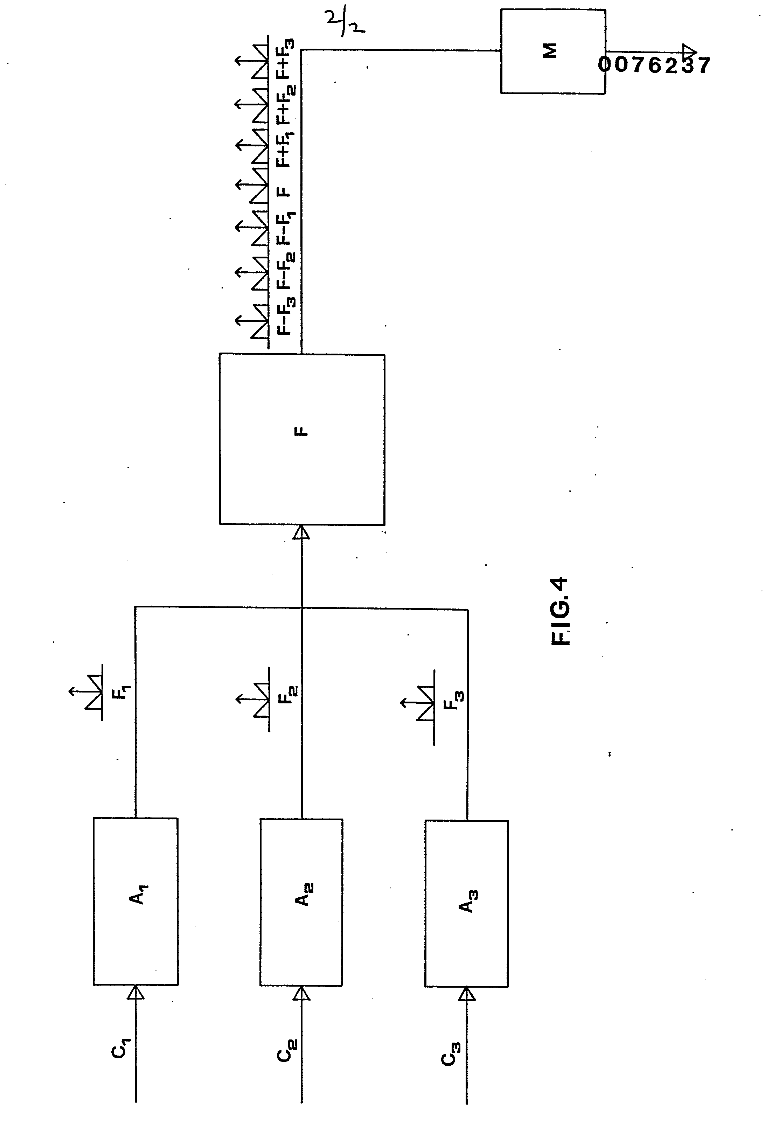

In reference to the block diagram in figure 4, the low frequency signal of each individual channel $C_1$, $C_2$, $C_3$ is fed into one of the modulators $A_1$, $A_2$, $A_3$ at a suitable amplitude and frequency; the three output signals from said modulators (signals $F_1$, $F_2$, $F_3$) are sent via a mixing circuit to a bearing generator at frequency F, which modulated in frequency from the above channels generates emission spectrum $F-F_3$, $F-F_2$, $F-F_1$, F, $F+F_1$,

$F+F_2$, $F+F_3$.

Reception occurs by tuning the receiver to frequencies $F+F_1$, $F+F_2$, $F+F_3$, with a high pass filter M in the transmission circuit to eliminate or at least attenuate the frequency portion $F-F_1$, $F-F_2$, $F-F_3$.

In one possible embodiment, the apparatus according to the invention may be used for recording and projecting tapes in television studios.

Of course, the principle of the finding remains unchanged even when the forms of realization and the details of construction are widely varied with respect to that described and illustrated here, without going beyond the bounds of the invention.

0076237

Claims:

1. Apparatus for simultaneous cinematographic viewing in several languages.

2. Apparatus for simultaneous cinematographic viewing as claimed in claim 1, consisting fo a film with one optical track and four magnetic tracks: the original version sound track is recorded on the former, while all or some of the others contain versions in different languages, so that all the recorded information, passing before the optical reading cell and the multiple head for magnetic reading in the projector, is sent contemporaneously to the preamplifiers, form where the signals are sent via cable to a fixed radio transmitter, preferably frequency modulation, placed and balanced for the volume of the movie theater; said theater is equipped with antennas for the contemporaneous transmission, to several portable receivers distributed among the viewers, of the various versions, selected with a channel selector and received over earphones.

3. Apparatus for simultaneous cinematographic viewing as claimed in the preceding claims, wherein said portable receivers have no channel selectors and are tuned to a transmitter signal corresponding to only one language.

4. Apparatus for simultaneous cinematographic viewing as claimed in the preceding claims, wherein said receivers are not portable and are inserted in or connected to the seat or position for each spectator.

5. Apparatus for simultaneous cinematographic viewing as claimed in the preceding claims, wherein the film used may be of the type used for stereophonic versions, where the different language versions are recorded on the magnetic tracks, totally or partially replacing the sound effects.

6. Apparatus for simultaneous cinematographic viewing as claimed in claims 1, 2 and 5, with film 1 with optical track 2 for the original language version and magnetic tracks 3 for the translations, suitable for use in a projector of known type; signals from said film are read contemporaneously on all or part of said tracks 2 and 3, and sent via cable 4 and collector 5 to fixed radio transmitter 6, of frequency, amplitude, CB or other type modulation, supplied electric current via plug 7 and equipped with signal regulators 8 to vary the volume according to the intensity of the recording, with transformer 9 and antennas 10 to send the signals to portable receivers 11; said receivers are coherent with transmitter 6, and equipped with channel selector 12, switch and volume regulator 13, and headphone 15 with terminal 14.

7. Apparatus for simultaneous cinematographic viewing as claimed in the preceding claims, wherein the low frequency signal of each individual channel $C_1$, $C_2$, $C_3$ is fed into one of the modulators $A_1$, $A_2$, $A_3$ at a suitable amplitude and frequency; the three output signals from said modulators (signals $F_1$, $F_2$, $F_3$) are sent via a mixing circuit to a bearing generator at frequency F, which modulated in frequency from the above channels generates emission spectrum $F-F_3$, $F-F_2$, $F-F_1$, F, $F+F_1$, $F+F_2$, $F+F_3$; reception occurs by tuning the receiver to frequencies $F+F_1$, $F+F_2$, $F+F_3$, with a high pass filter M in the transmission circuit to eliminate or at least attenuate the frequency portion $F-F_1$, $F-F_2$, $F-F_3$.

FIG.1

FIG.2

FIG.3

0076237

**FIG.4**

# RAPPORT DE RECHERCHE EUROPEENNE

EP  82 40 1743

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 60 R  25/02 |
| X | DE-A-2 026 339  (VOLKSWAGEN) *En entier* | 1 | |
| | --- | | |
| A | FR-A-1 314 114  (WILMOT-BREEDEN) *En entier* | 1 | |
| | --- | | |
| A | FR-A-  720 602  (NEIMAN) *En entier* | 1 | |
| | --- | | |
| A | DE-C-  823 703  (DAIMLER-BENZ) * En entier * | 1 | |
| | --- | | |
| A | EP-A-0 035 415 (PEUGEOT-CITROEN) *En entier* | 1 | |
| | ----- | | **DOMAINES TECHNIQUES RECHERCHES (Int. Cl. ³)** B 60 R |

Le présent rapport de recherche a été établi pour toutes les revendications

| Lieu de la recherche LA HAYE | Date d'achèvement de la recherche 05-01-1983 | Examinateur HEROUAN E. |
|---|---|---|

# DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-1 241 874 (COMPAGNIE EUROPEENNE DES MATERIELS DE TRANSMISSION) * the whole document * | 1-4,6 | G 03 B 31/00 |
| A | CH-A- 323 940 (LEE) * the whole document * | 1 | |
| A | FR-A- 942 769 (INTERNATIONAL STANDARD ELECTRIC CORP.) * figure 2 * | 7 | |

TECHNICAL FIELDS
SEARCHED (Int. Cl. 3)

G 03 B 31/00
G 11 B 31/00
H 04 J 1/04

The present search report has been drawn up for all claims

| Place of search THE HAGUE | Date of completion of the search 21-01-1983 | Examiner MEES G. |
|---|---|---|